Europäisches Patentamt

European Patent Office

Office européen des brevets

(11) Publication number: **0 416 432 A2**

## (12) EUROPEAN PATENT APPLICATION

(21) Application number: 90116433.5

(22) Date of filing: 28.08.90

(51) Int. Cl.⁵: **B32B 15/14, B62K 19/16, F16L 9/14**

(30) Priority: 04.09.89 JP 229833/89

(43) Date of publication of application:
13.03.91 Bulletin 91/11

(84) Designated Contracting States:
DE FR GB IT

(71) Applicant: **KABUSHIKI KAISHA FUKUROTANI SEISAKUSHO**
44-banchi, 3-chome
Takasago Takaishi-City, Osaka 592(JP)

Applicant: **NIPPON PETROCHEMICALS CO, LTD**
1-3-1, Uchisaiwaicho, Chiyoda-ku
Tokyo 100(JP)

(72) Inventor: **Tomisako, Shinji**
44-banchi 3-chome, Takasago,
Takaishi-City Osaka 592(JP)
Inventor: **Yasuhara, Masanori**
20-go 220-ban 2-cho, Showacho Hamadera
Sakai-City, Osaka 592(JP)

(74) Representative: **Schickedanz, Willi, Dipl.-Ing.**
Langener Strasse 68
W-6050 Offenbach/Main(DE)

(54) A shaft body made of metal film and carbon fibers and method for manufacturing the same.

(57) The invention relates to a shaft body (2) made up with a metal film layer (4) and a resin-impregnated carbon fiber fabric layer (6) thermally adhered to each other in a cylindrical shape of any desired cross sectional shapes. Such a shaft body (2) is produced by first forming a metal film (4) into a cylinder and then the carbon fiber fabric (6), into which a resin has been impregnated, is wrapped around the metal film cylinder (4) and finally thus formed cylindrical body (2) is heated so that the resin in the carbon fiber fabric (6) is hardened.

FIG. 2(G)

EP 0 416 432 A2

# A SHAFT BODY MADE OF METAL FILM AND CARBON FIBERS AND METHOD FOR MANUFACTURING THE SAME

## Technical field to which the invention relates

The present invention relates to a shaft body used for bicycles, motorcycles, automobiles, yachts, wind-surfing masts, etc. and a method for manufacturing the same and more particularly to shaft body obtained from a combination of metal films and carbon fibers and a method for manufacturing such a shaft body.

## PriorArt

In recent years, bicycle competitions such as road races, triathlon events, mountain biking (ATB), etc. have become more and more popular. As bicycling becomes more popular and spreads to children and elderly people, a demand for lightening the bicycle frame as well as improvement in the safety in bicycle riding increases.

In this trend, one of the techniques for lightening the bicycle weight is to replace steel pipes with aluminium pipes and even further with carbon fiber pipes. Recently revealed techniques decrease the weight of the bicycle dramatically by replacing various types of bicycle pipes, which make the bicycle body heavy, with carbon fiber pipes (CORP).

Since carbon fiber pipes are strong and extremely light, such pipes are considered safe to be used in bicycles. However, when a partial breakage occurs in carbon fiber pipes as a result of an abrupt impact, there would be a danger that the carbon fiber pipes would break into pieces.

Accordingly, it is necessary to endow carbon fiber pipes with the ability to absorb shocks before the point where the breakage occurs when such impacts are applied to the pipes. In order to achieve this, one type of pipe has been proposed. This pipe is made by wrapping a prepreg (formed by impregnating a resin into carbon fiber fabric) around an aluminum pipe, and then thermally hardening the resin in the prepreg so that an aluminum layer and carbon fiber layer are laminated on the pipe. In this pipe, the carbon fibers are reinforced and supported by the aluminum pipe so as to prevent the breakage caused by impacts.

## Disadvantages of the Prior Art

However, the above-mentioned two-layer pipe has drawbacks in spite of its general advantages.

First, since the carbon fiber layer is laminated on the aluminum pipe, the weight of the pipe becomes much heavier than a carbon fiber pipe itself. Even though the aluminum pipe is made thinner, thickness is limited as far as the existing aluminum pipes are used. Thus, it is unavoidable to reduce the weight. In addition, there is also a limitation to reducing the weight even though the inner diameter of the aluminum pipe is reduced as far as the existing aluminum pipes are used.

Furthermore, since the cost of the aluminum pipe is added to the cost of the carbon fibers, the pipe tends to be very expensive.

The most serious problem with the above-described pipe is that the coefficient of linear expansion of aluminum is positive, while that of the carbon fibers is negative. In other words, when heated, aluminum undergoes thermal expansion, while the carbon fibers undergo thermal shrinkage.

Furthermore, when the two-layer pipes described above are manufactured, the resin is thermally hardened by heating the prepreg. When this is performed, however, the inner aluminum expands and the carbon fibers shrink; as a result, the carbon fibers are placed under an extreme tension. Accordingly, when the pipe is cooled, a severe stress concentration occurs in various portions of the carbon fibers, and a latent danger of carbon fiber breakage is created. Of course, since the aluminum pipe is located inside the carbon fiber layer, an actual danger would be minimal, though the quality of the resulted pipe is severely compromised.

## Technical problem of the invention

Accordingly, the technical problem of the present invention is to eliminate the drawbacks in prior art pipes used for frames for bicycles, etc.

## Solution of the Problem

The above problem is solved by the features as defined in claim 1.

## Advantages of the invention

By means of the invention a shaft body can be obtained by rolling up and fixing, at least, a metal film and carbon fibers so as to form a shaft body obtained from a combination of the metal film and carbon fiber fabric.

One of the most important features of the present invention is that a metal film such as an aluminum foil is employed and existing metal pipes such as aluminum pipes are not used at all. As mentioned above, in the existing metal pipes, the internal diameter and thickness of the pipes are limited. However, with the metal film rolled up or wrapped around the outer surface of the core as in the present invention, the internal diameter of the resulting metal-film pipe can be different as desired by merely selecting core material having different outer diameters, and the thickness of the shaft can be freely adjusted by altering the number of wrappings and/or thickness of the metal film.

Accordingly, the metal layer can be formed inexpensively and the weight of the metal layer can be lightened. As a result, the thickness and weight, which the shaft body will have after the formation of the carbon layer, can easily be adjusted. Accordingly, the method of the present invention can contribute a cost reduction and meet a small-scale production of various different types of shaft bodies.

When the thermal hardening of the resin is performed during the production of the shaft bodies via the method of the present invention, the thermal expansion of the metal film toward the outside is extremely small compared to that of metal pipes.

The shaft body in the prior art is formed by metal pipe and carbon fiber fabric, e. g. the metal pipe is steel pipe or aluminum pipe. These pipes are rigid bodies. Then thermal expansion of the pipes tends toward the outside of the pipe. On the other hand, the shaft body in this invention is formed by metal film and carbon fiber fabric. For example this metal film is aluminum foil or metal wrapping film. This film is very transformably or distortably because of its thinness. So the thermal expansion tends toward the outside, inside or horizontal for the surface of the pipe. Accordingly, the effects giving for the carbon fiber fabric are less than the prior art.

Accordingly, stress concentrations and residual stresses in the carbon fibers can be remarkably reduced. In addition, if a lengthy gap (or slit) is formed in the axial direction when the metal film is wrapped, the metal film which is thermally expanded will merely close this gap, and no increase in the inner diameter will occur. Thus, there is no outward-directed expanding force, and no excessive stresses are generated in the carbon fibers.

In the present invention, a stainless steel film, aluminum film, titanium film, chromium-molybdenum alloy film, etc., can be used as the metal film. Selection of the metal film depends on the intended use of the shaft body in view of different factors including weights, corrosion resistance, malleability, costs, etc. A titanium film is probably the most desirable material to be used as the shafts for bicycle frames. Though the existing titanium pipes have not general utility and therefore such pipes are not mass-produced, according to the present invention, a shaft body can be formed with a titanium film.

As to the carbon fibers used in the present invention, a prepreg formed by a carbon fiber fabric impregnated with a liquid-form resin is used.

With regard to a method for combining the carbon fibers with the metal film in the present invention, various different methods can be employed. Such methods include, for example, (a) a method in which the metal film is first wrapped around a core, the prepreg is wrapped thereon and then this assembly is hardened, (b) a method in which the metal film and prepreg are laid together and then wrapped around a core, and (c) a method in which the metal film is rolled up to form a cylinder, a core is inserted into this cylinder, and then the prepreg is wrapped aroung this assembly and hardened.

Since the shaft body of the present invention is obtained as described above, the metal film (as a result of its malleability) can absorb and disperse any sudden shock received by the carbon fibers is prevented. Accordingly, the shock resistance and breaking strength of the shaft body are remarkably increased, and the safety of bicycles, motorcycles, automobiles, etc. built with the shaft body of the present invention is greatly improved.

The range of application of the present invention is extremely broad. In other words, the shaft body manufactured in accordance with the present invention can also be used as tennis rackets, golf clubs, fishing poles, furniture, etc.

If a metal mandrel is used as a core, a hollow shaft body can be formed by removing the mandrel after the resin has hardened. Pipes with various cross-sectional shapes can be formed by selecting mandrels of different cross-sectional shapes such as circular, triangular, square, hexagonal, etc.

If the core is not necessary to be removed, the foam core can be used. In this case, the weight of the core will become almost zero and curved pipes such as those used as bicycle handlebars can be easily manufactured. More specifically, if a titanium film and a carbon fiber fabric are wrapped around the circumference of a core shaped in handlebar, a handlebar pipe which is the same as an ordinary steel handlebar can be manufactured. In other words, according to the present invention, straight pipes as well as bent pipes can be manufactured.

Brief description of the drawings

Figure 1 is a partially cross-sectional perspective view of one embodiment of a shaft body in accordance with the present invention;

Figures 2(A) through 2(G) illustrate a process of manufacturing the shaft body of Figure 1;

Figures 3(a) through 3(D) and 4(A) through 4(D), respectively, illustrate other shaft body manufacturing methods;

Figures 5(a) through 5(D) show cross sections of various types of shaft bodies in accordance with the present invention; and

Figure 6 is a perspective view of a bicycle handlebar produced in accordance with the present invention.

Detailed description of the invention

Embodiments of the pipes of the present invention will be described in detail below.

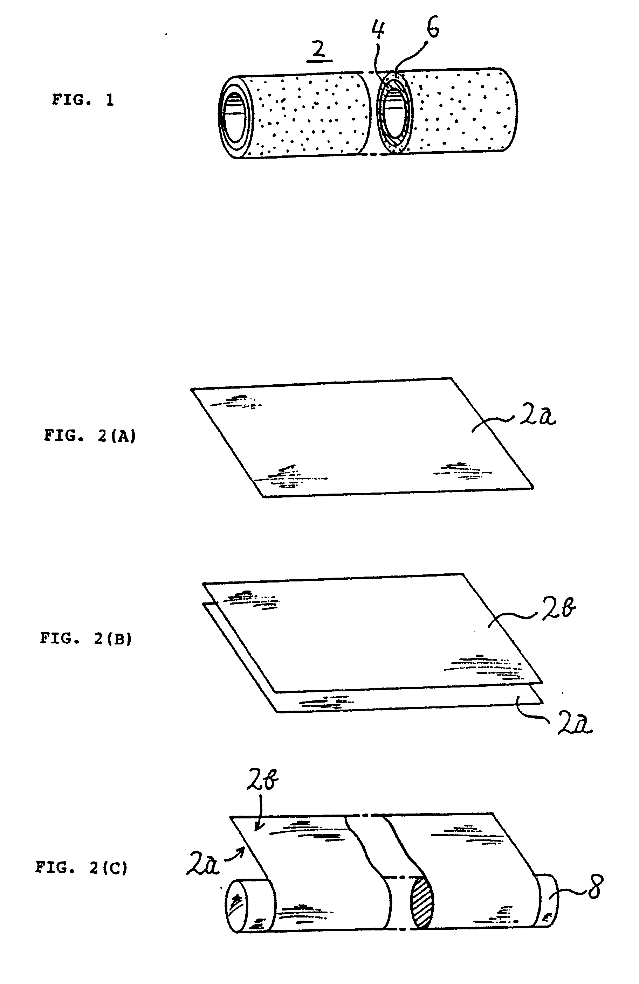

Fig. 1 is a partially cross-sectional perspective view of a completed shaft body 2 in which a carbon layer 6 is laminated and fixed on the surface or circumference of a metal layer 4.

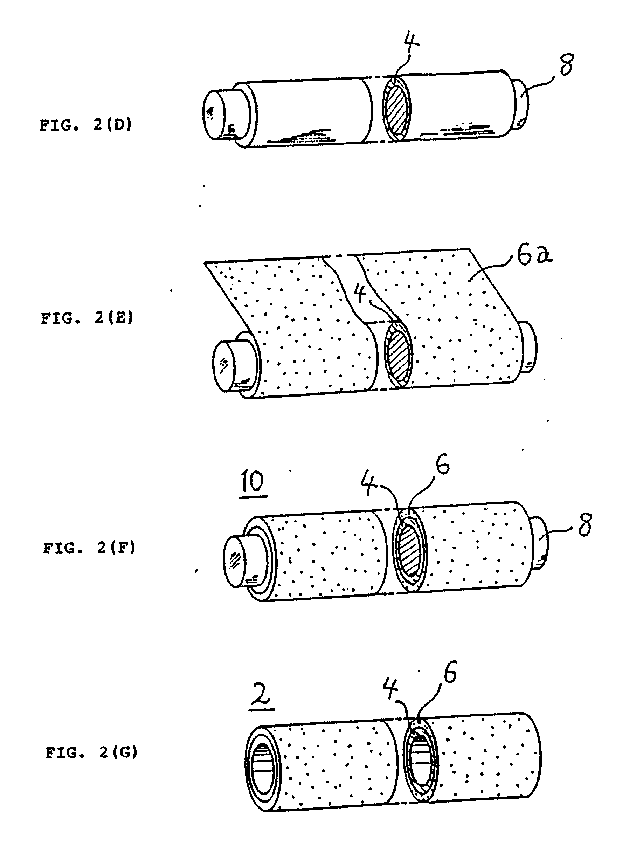

Figs. 2(A) through 2(G) show a manufacturing process of the shaft body 2 of Fig. 1.

Fig. 2(A) illustrates a metal film 2a with a thickness of 20 microns to 50 microns, which is appropriate for the shaft body of the present invention. It goes without saying that films of other thicknesses may be used. If the film is too thick, wrapping will become difficult; and if the film is too thin, the cost of the film will be increased.

In the embodiment described below, a titanium film is used as the metal film; however, depending on the intended use, it would be possible to use a stainless steel film, an aluminum film, a chromium-molybdenum film, etc. The features of light weight and good corrosion resistance, etc. of titanium can be utilized to a great advantage for bicycle pipes. Materials such as titanium alloys, etc. can also be used in addition to pure titanium.

The metal film 2a is washed with water after its surface is being roughened by etching or honing.

Fig. 2(B) illustrates a process in which an adhesive film 2b is bonded to one side of the metal film 2a. It would be possible to apply a coating of an adhesive agent instead of the adhesive film. Since the surface of the metal film 2a has been roughened in the previous step, the area of contact between the metal film 2a and the adhesive film or adhesive agent is increased. Thus, a very high adhesive strength is obtainable.

Fig. 2(C) shows the wrapping process of the metal film around the circumference of a core (mandrel) 8. The metal film 2a is wrapped so that the adhesive film 2b is on the outside. The number of wrappings varies case by case basis, and it is advisable to use several wrappings.

Fig. 2(D) shows the resulting metal layer 4 wrapped around the circumference of the core material 8. Though the thickness of the metal layer 4 can be set differently, 0.03 to 0.3 mm is the most appropriate.

Fig. 2(E) illustrates a process in which a prepreg 6a is wrapped around the circumference of the metal layer 4. Since the outer surface of the metal layer 4 is an adhesive film, the prepreg 6a is strongly bonded to the adhesive film.

The prepreg 6a is formed by impregnating a liquid resin into a carbon fiber fabric. This carbon fiber fabric is a cloth formed by weaving or knitting carbon fibers or a non-woven fabric of carbon fibers.

Ordinarily, an epoxy resin or a polyester resin is used as the liquid resin; however, other thermosetting resins of thermoplastic resins may also be utilized. In other words, polyamides, aromatic polyamide, polybenzothiazole, polyethersulfone, polyaminobismaleimide, etc. may be used.

The number of wrappings of the prepreg 6a may be selected as desired. In most cases, ten or less wrappings will be most appropriate.

Fig. 2(F) shows a completed intermediate part 10 formed by wrapping the metal layer 4 and carbon layer 6 around the core 8.

When, in the next step, the intermediate part 10 is placed in an electric oven and heated, the adhesive film 2b and liquid-form resin are hardened, and the metal layer 4 and carbon layer 6 are tightly settled overall. Thus, an integral pipe body is obtained.

When the core 8 is removed after this, a shaft body having a form of a pipe as shown in Fig. 2(G) is completed.

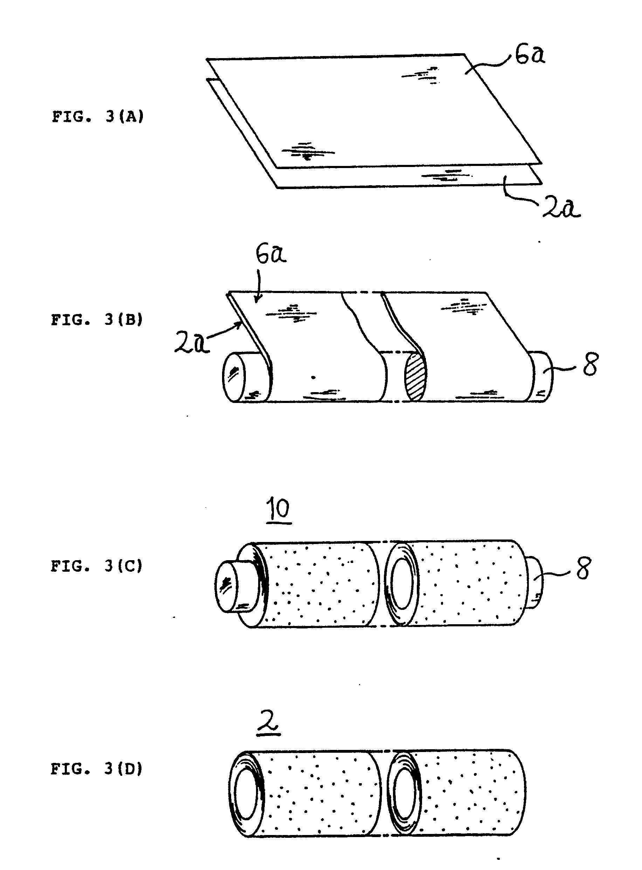

Figs. 3(A) through 3(D) illustrate a second embodiment of the method of manufacturing a shaft body in accordance with the present invention.

First, the metal film 2a and prepreg 6a are laid together or placed one on the other. In other words, the prepreg 6a is placed on the metal film 2a. Next, this assembly is wrapped around a core B so as to form an intermediate part 10 wherein the metal film 2a and carbon fiber fabric are laminated in alternating layers. After this, the intermediate part 10 is heated in an electric oven so that the resin is hardened, and the shaft body 2 is completed by removing the core 8.

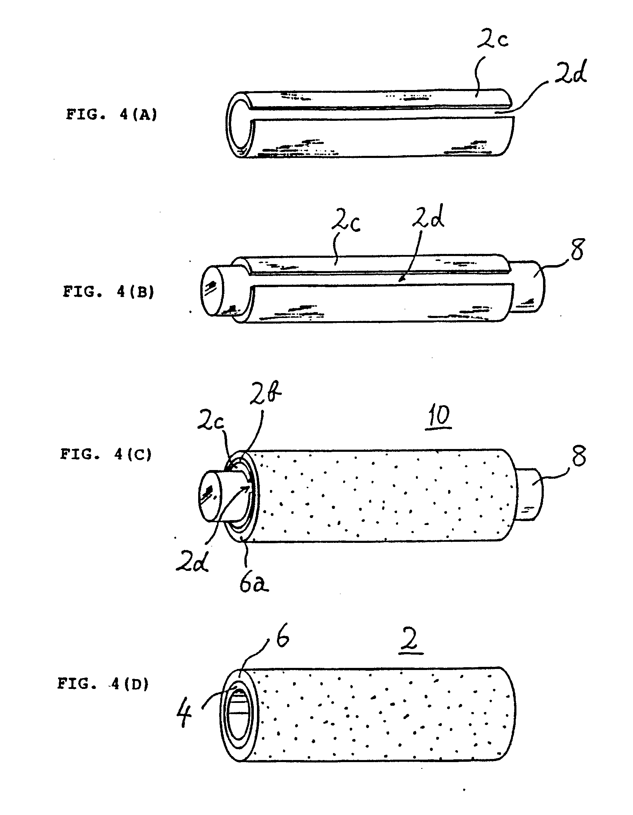

Figs. 4(A) through 4(D) illustrate a third embodiment of the present invention.

The metal film 2a is rolled up to make a metal film cylinder 2c. A gap is left between the two ends of the cylindrical metal film 2a so that the gap becomes a slit 2d.

After a core 8 is inserted into this metal film cylinder 2c, an adhesive film 2b is wrapped around the metal cylinder 2c. Then, a prepreg 6a is wrapped around the thus formed assembly so as to make an intermediate part 10. When this intermediate part 10 is thermally hardened, the metal film cylinder 2c expands and closes the slit 2d, thus forming a metal layer 4. In this case, there is almost no change in the internal diameter of the metal cylinder 2. Since no expansion force acts in the outward direction, no excessive stresses are generated in the carbon layer 6. As a result, an extremely high-quality shaft body is manufactured.

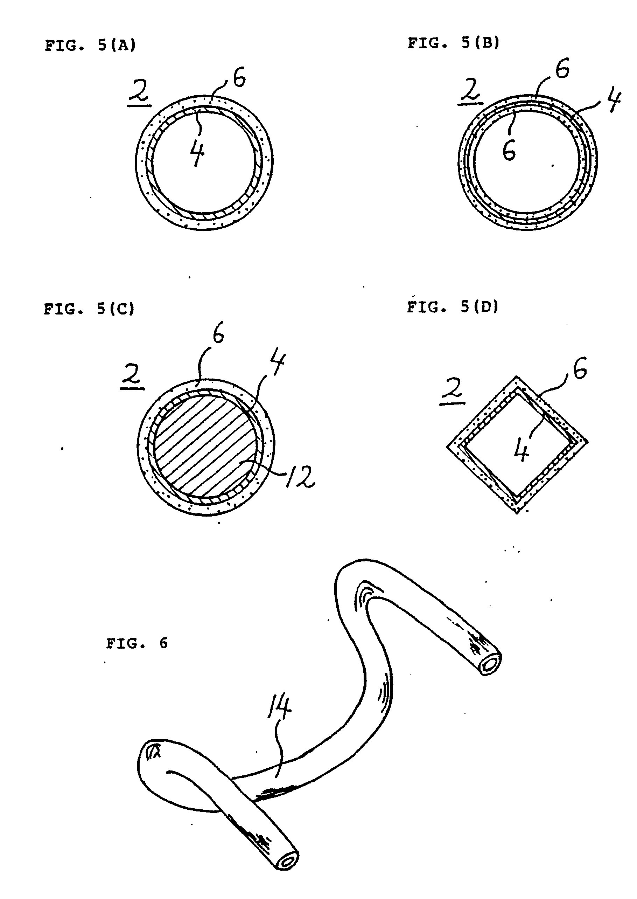

Fig. 5(A) shows a cross section of the shaft body 2 of Fig. 1. From this figure, it can be easily seen that the carbon layer 6 is laminated on the metal layer 4.

Figs. 5(B) through 5(D) illustrate the cross sections of the shaft bodies of other embodiments.

In Fig. 5(B), the carbon layer 6 is installed not only on the outside of the metal layer 4 but also on the inside thereof. Alternatively, it would be possible to install the metal layer 4 on the most outer surface and/or to install the metal layers 4 in plurality. Fig. 5(C) shows that the inside of the metal layer 4 is filled with a foam 12, and Fig. 5(D) shows a shaft body 2 having a square cross section as a result of use of a square core.

Fig. 6 illustrates a bicycle handlebar 14. In this case, a foam is shaped into a bicycle handlebar and used as a core. A metal layer and carbon layer are formed on the outer surface of this foam by the same method as explained by way of Fig. 2, and the core remains in the shaft body without being removed. Since the core is made of a foam, the shaft body is extremely light. Thus, the handlebar 14 is formed with the core left inside. As described above, according to the present invention, bent pipes can be formed as well as straight pipes. The present invention is not limited to the embodiments described above. Various modifications and design alterations, etc. are within the technical scope of the present invention as long as there is no departure from the technical spirit of the invention. As described above, according to the present invention, shaft bodies are manufactured by laminating a carbon layer and a metal layer (a layer consisting of a metal film). As a result, the brittleness of the carbon is compensated for the strength and malleability of the metal layer. Thus, the shock resistance and breaking strength are greatly improved. Accordingly, the shaft body which is light and extremely safe is manufactured which is utilized in a broad range of industrial fields including bicycles, motorcycles, automobiles, sport equipment, furniture, etc.

## Claims

1. A shaft body (2), **characterized in that** said body at least comprises a metal film (2a, 4) and carbon fiber fabrics (6, 6a) adhered to each other.

2. A shaft body (2) according to claim 1, **characterized in that** the metal film (2a, 4) and the carbon fiber fabrics (6, 6a) are rolled up.

3. A shaft body (2) according to claim 1, **characterized in that** the metal film (2a, 4) is selected from the group consisting of a titanium film, stainless steel film, aluminum film and chromium-molybdenum alloy film.

4. A shaft body (2) according to claim 1, **characterized in that** an adhesive layer (2b) is provided between the metal film (2a, 4) and the carbon fiber fabrics (6, 6a).

5. A shaft body (2) according to claim 1, **characterized in that** the carbon fiber fabrics is a cloth formed by weaving or knitting carbon fibers.

6. A shaft body (2) according to claim 1, **characterized in that** the carbon fiber fabrics (6, 6a) is impregnated by a resin, thus forming a prepreg.

7. A method for manufacturing a shaft body (2), **characterized in that** said method comprises the steps of:

   a) wrapping a metal film (4), which has an adhesive layer on one side, around a core (8) so that said adhesive layer is on the outside;

   b) wrapping a prepreg, formed by impregnating a resin into a carbon fiber fabric, around said metal film (4), so as to form an intermediate part;

   c) hardening said resin of said intermediate part.

8. A method for manufacturing a shaft body (2), **characterized in that** said method comprises the steps of:

   a) forming an intermediate part by wrapping a prepreg and a metal film, which are placed one on the other, around a core (8), said prepreg being formed by impregnating a resin into a carbon fiber fabric;

   b) hardening said resin of said intermediate body.

9. A method of manufacturing a shaft body **characterized in that** said method comprises the steps of:

   a) forming a metal film into a cylinder;

   b) inserting a core into said metal film cylinder and providing an adhesive layer on the circumference of said metal film cylinder;

   c) wrapping a prepreg, which is formed by impregnating a resin into a carbon fiber fabric, around the circumference of said adhesive layer so as to form an intermediate part; and

   d) hardening said resin of said intermediate part.

10. A method for manufacturing a shaft body **characterized by** the following steps:

   a) selecting a metal film from the group consisting of titanium film, stainless steel film, aluminum film and chromium-molybdenum film, said film having a thickness of 20 microns to 50 microns;

b) roughening said metal film at least on one side by etching, honing or the like;

c) providing the roughened surface of said metal film with an adhesive layer;

d) wrapping said metal film with said adhesive layer around a core;

e) preparing a prepreg by impregnating a liquid resin into a carbon fiber fabric;

f) wrapping said prepreg around said adhesive layer of said metal film;

g) hardening said resin in said carbon fiber fabric.

FIG. 1

FIG. 2(A)

FIG. 2(B)

FIG. 2(C)

FIG. 2(D)

FIG. 2(E)

FIG. 2(F)

FIG. 2(G)

FIG. 3(A)

FIG. 3(B)

FIG. 3(C)

10

8

FIG. 3(D)

2

FIG. 4(A)

2c

2d

FIG. 4(B)

2c

2d

8

FIG. 4(C)

2c

2b

10

8

2d

6a

FIG. 4(D)

6

2

4

FIG. 5(A)

FIG. 5(B)

FIG. 5(C)

FIG. 5(D)

FIG. 6